# EUROPÄISCHE PATENTSCHRIFT

(11) **EP 2 264 337 B1**
(45) Veröffentlichungstag und Bekanntmachung des Hinweises auf die Patenterteilung: **24.10.2012**
(21) Anmeldenummer: 10008067.0
(22) Anmeldetag: 08.06.2009
(51) Int. Cl.: F16H 57/04, F01M 11/03, F01M 11/00, F01M 11/04

(54) **Ölwanne mit Ölfilter**
Oil basin with oil filter
Vanne d'huile dotée d'un filtre à huile

(30) Priorität: 10.06.2008 DE 102008027662
(43) Veröffentlichungstag der Anmeldung: 22.12.2010
(62) Teilanmeldung aus: 09007560.7
(73) Patentinhaber: IBS Filtran Kunststoff-/Metallerzeugnisse GmbH, 51597 Morsbach (DE)
(72) Erfinder: Beer, Markus, 51597 Morsbach (DE); Jacob, Michael, 51597 Morsbach (DE); Stausberg, Wolfgang, 51597 Morsbach (DE); Sahm, Dietmar, 51580 Reichshof (DE); Piehlk, Andreas, 57258 Freudenberg (DE)
(74) Vertreter: Polypatent

(56) Entgegenhaltungen:
- EP-A- 1 339 954
- EP-A- 1 825 897
- US-A1- 2003 024 768
- US-B1- 6 584 950

## Beschreibung

Die Erfindung betrifft eine Ölwanne, vorzugsweise aus Kunststoff oder Metall, für Motoren oder Getriebe, mit einem Filtergehäuse, umfassend eine Filtergehäuseoberschale, eine Filtergehäuseunterschale, ein Filtermedium, einen Filtereinlass und einen Filterauslass, und einer Ölablassöffnung im Bodenbereich der Ölwanne, die in der Weise ausgebildet ist, dass sie mittels einer von der Ölwannenunterseite kommenden Ölablassschraube mit Außengewinde verschließbar ist.

Aus dem Stand der Technik bekannte Ölwannen, vorzugsweise aus Metall oder Kunststoff, weisen üblicherweise einen in direkter Nähe zum Ölwannenboden platzierten separaten Filter, umfassend wenigstens ein Ölfiltermedium und ein Ölfiltergehäuse, der vorzugsweise als Saugölfilter ausgebildet ist, auf. Derartige Ölwannen mit einem solchen Ölfilter sind beispielsweise aus des EP 1 339 954 B1, der EP 1 333 160 A1, EP 1 825 897 A2, US 2003/0024768 A1, US 6,584,950 B1 und der DE 10 2005 025 726 A1 bekannt. Problematisch bei den vorstehend angegebenen Filtern ist, dass durch die Separierung der Bauteile, wie insbesondere der Ölwanne und dem Ölfilter, eine aufwendige Befestigung/Fixierung der Bauteile untereinander notwendig ist. Eine Verbindung dieser Bauteile erfolgt im Stand der Technik beispielsweise durch eine Vernietung etc. Des Weiteren weisen separat in einer Ölwanne platzierte Ölfilter einen Spalt zwischen der Filterunterseite und der Innenseite der Ölwanne auf, der ein unkontrolliertes Luftansaugen sowie die Entwicklung von Geräuschen durch Bewegung des losen Filters in der Ölwanne zur Folge hat. Dies hat eine Senkung der Filtereffizienz und eine Reduktion des Einsatzkomforts zur Folge.

In anderen Fällen wird der Filter fest und nicht mehr lösbar, durch beispielsweise Verschweißung/Verklebung in der Ölwanne befestigt. Dies ist beispielsweise aus der DE 100 08 692 A1 und der DE 197 35 445 A1 bekannt. Nachteilig an diesen Ausführungsformen ist, dass ein separater Austausch des Filters nicht möglich ist und ein Austausch der Ölwannen-Ölfiltereinheit somit sehr aufwendig und kostenintensiv ist.

Aufgabe der Erfindung ist es daher, eine Ölwanne mit einem Ölfilter anzugeben, die die vorstehend dargelegten Nachteile nicht mehr aufweist bzw. insbesondere eine Ölwanne, vorzugsweise aus Metall oder Kunststoff, mit einem Ölfilter anzugeben, in der der Ölfilter fest integrierbar ist, wobei gleichzeitig die Anzahl der notwendigen Bauteilkomponenten reduziert, die Montage erleichtert, die Kosten zur Herstellung und Installation gesenkt, unerwünschte nachteilige technische Effekte reduziert und der Filter bei Bedarf einfach wechselbar und somit separierbar in der Ölwanne angeordnet sein soll.

Die Lösung der Aufgabe gelingt mit einer Ölwanne gemäß Anspruch 1, bei der das Filtergehäuse ein Klemmmittel aufweist, mit welchem das Filtergehäuse in der Ölwanne positioniert und befestigt wird, in der Weise, dass das Klemmmittel in ein ölwannenseitig angeordnetes Rastmittel eingreift.

In einer weiteren bevorzugten Ausführungsform umfasst die Filtereinheit eine Aufnahme, insbesondere einen Aufnahmerahmen, der zur Aufnahme des Filtermediums ausgebildet ist. Die Aufnahme kann dabei ein separates Bauteil, oder aber auch in der Ölwanne aufgeformt sein. Zwischen der Aufnahme und der Filtergehäuseoberschale und/oder dem Ölwannenboden kann ferner eine Dichtung oder ein Klebschicht vorhanden sein, um eine besonders dichte Verbindung zu erreichen.

Nachfolgend wird die Erfindung anhand der in den Zeichnungen dargestellten Ausführungsbeispiele weiter beschrieben. Es zeigen schematisch:
Fig. 1 Perspektivische seitliche Schnittansicht durch eine Ölwanne mit einem Ölfilter in einer ersten Ausführungsform die nicht Gegenstand der Erfindung ist;
Fig. 2 Perspektivische Ansicht einer Ölwanne mit einem Ölfilter in einer zweiten Ausführungsform, die ebenfalls nicht Gegenstand der Erfindung ist;
Fig. 3 Perspektivische Schnittansicht der Ölwanne aus Figur 2 entlang der Linie A-A;
Fig. 4 Seitliche Schnittansicht der Ölwanne aus Figur 2 bzw. 3;
Fig. 5 Perspektivische Ansicht auf eine Ölwanne mit einem Ölfilter in einer dritten Ausführungsform ähnlich der Erfindung Der Gegenstand des anspruchs 1 unterscheidet sich vom gegenstand der Fig.5-6 dadurch, dass die Filtergehäuseunterschale von einem Bodenbereich der ülwanne gebildet wird und nicht wie in den Fig. 5-6 dargestellt durch ein separates bauteil 4". und
Fig. 6 Schnittansicht der Ölwanne aus Figur 5 entlang der Linie B-B.

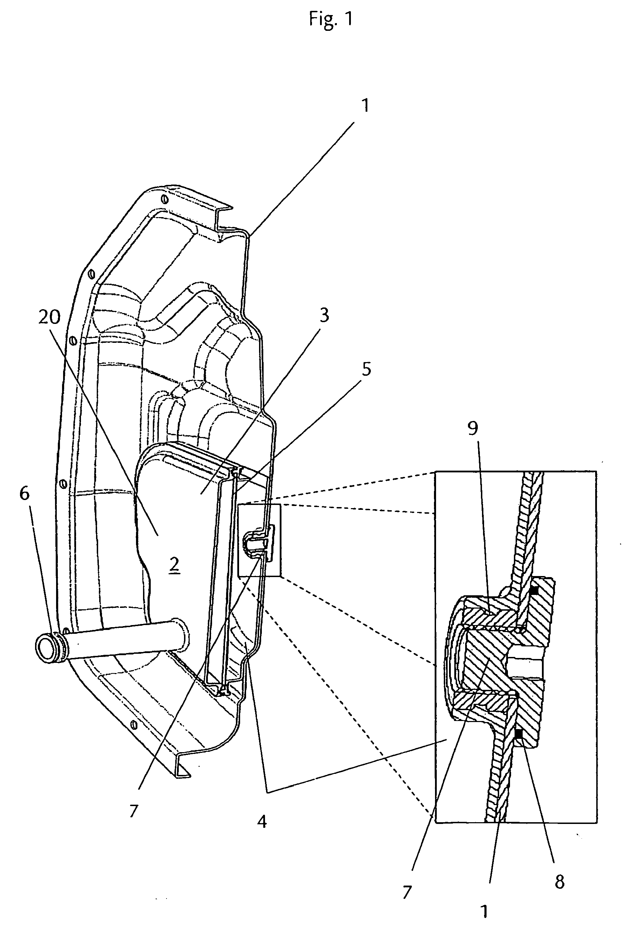

Die Ölwanne 1 gemäß der ersten Ausführungsform aus Fig. 1 umfasst einen an der Ölwanne 1 befestigten Ölfilter 2 mit einer Filtergehäuseoberschale 3, einer Filtergehäuseunterschale 4, ein zwischen den Filtergehäuseschalen 3 und 4 eingeklemmtes Filtermedium 5, einen Filterauslass G, eine Ölablassschraube 7 mit Dichtring 8 und einem Außengewinde (nicht dargestellt), und ein filtergehäuseunterschalenseitiges Innengewinde (nicht dargestellt), welches von einer mit der Filtergehäuseunterschale verbundenen Gewindebuchse 9 gebildet wird. Der Bereich um die Ölablassschraube 7 ist ferner in eine Ausschnittsvergrößerung in Fig. 1 hervorgehoben.

Beim Ausführungsbeispiel gemäß Fig. 1 ist das zweiteilige Filtergehäuse aus Filtergehäuseoberschale 3, die an der Filtergehäuseunterschale 4 befestigt ist, und Filtergehäuseunterschale 4 somit allein über das an der Filtergehäuseunterschale 4 angeordnete Innengewinde der Gewindebuchse 9 , in das das Außengewinde der Ölablassschraube 7 eingreift, befestigt. Zum Austauschen der gesamten Filtereinheit muss somit allein die Ölablassschraube 7 gelöst werden. Diese Vorgehensweise ist auch deshalb besonders vorteilhaft, da in der Praxis mit einem Ölfilterwechsel üblicherweise auch ein Ölwechsel einhergeht.

Zusammenfassend ergeben sich für das erste Ausführungsbeispiel somit insbesondere folgende Vorteile:
a) Erleichtert Montage an die Ölwanne (bzw. an das Getriebe),
b) fest positionierter Filter,
c) Austauschbarkeit des Filters ist allein durch Lösen der Ölablassschraube 7 möglich, und
d) Verwendung der Ölablaßschraube 7 als Filterfixierelement, so dass keine weiteren Befestigungsmittel erforderlich sind.

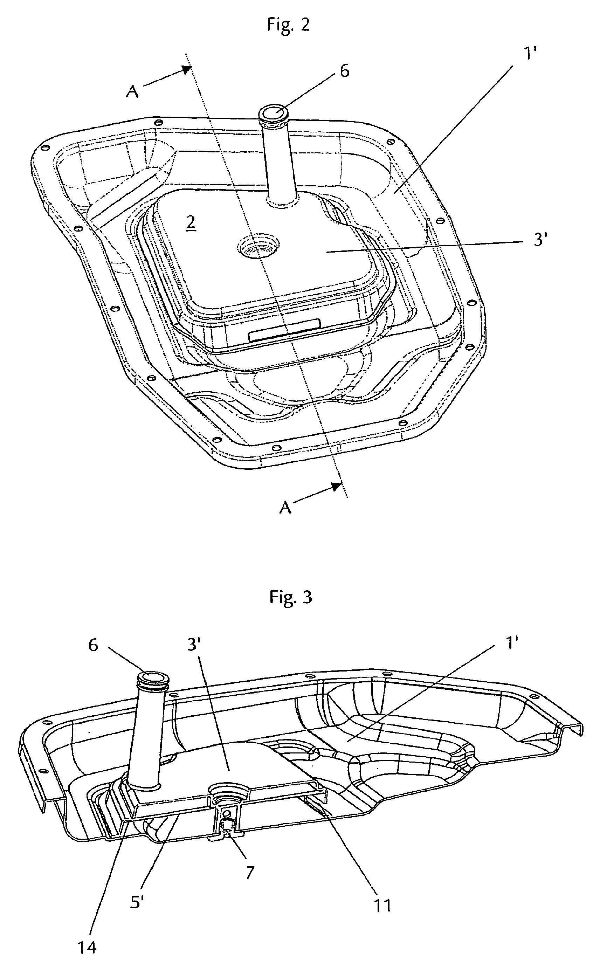

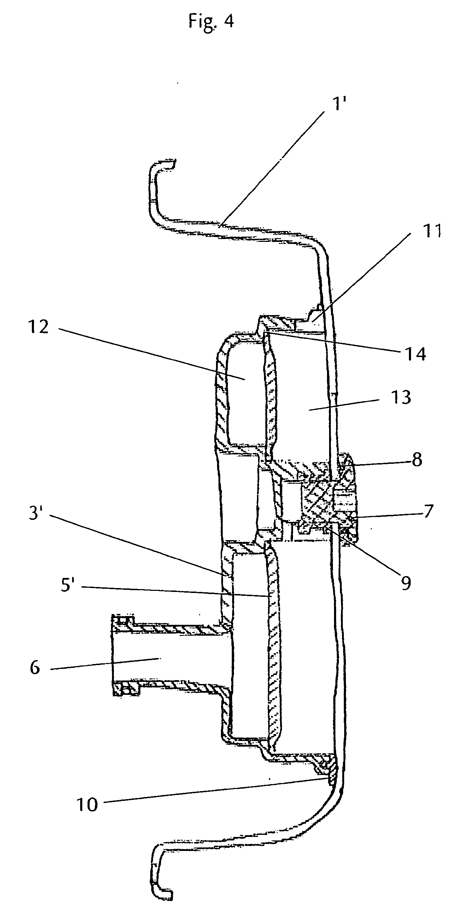

Die zweite Ausführungsform gemäß Figuren 2, 3 und 4 umfasst eine Ölwanne 1', eine Filtergehäuseoberschale 3', ein Filtermedium 5', einen Filterauslass 6, eine Ölablassschraube 7 mit Dichtring 8, eine filtergehäuseoberschalenseitig befestigte Gewindebuchse 9 mit Innengewinde (nicht dargestellt), eine Filterschalendichtung 10, einen Filtereinlass 11, einen Downstreambereich 12 und einen Upstreambereich 13. Die beispielsweise rahmenartig ausgebildete Aufnahme 14 dient der Aufnahme des Filtermediums 5' bei dieser einteiligen Ausführung des Filtergehäuses 20.

Der wesentliche Unterschied zur ersten Ausführungsform besteht darin, dass das Filtergehäuse zum Teil von einem Bodenbereich der Ölwanne 1' gebildet wird. Auf diese Weise ist eine separate Filtergehäuseunterschale bei dieser Ausführungsform nicht erforderlich. Um jedoch auch bei dieser Ausführungsform einen nach außen dichten Filtergehäuseinnenraum zu erreichen, umfasst die Ölwanne im Kontaktbereich mit der Filtergehäuseoberschale 3' die Filterschalendichtung 10, die lediglich im Bereich der Filtereinlasses 11 unterbrochen ist. Um eine Befestigung des Filtergehäuses bzw. vorliegend der Filtergehäuseoberschale 3' an der Ölwanne zu ermöglichen, ist bei dieser Ausführungsform ein Innengewinde an der Filtergehäuseoberschale 3' vorgesehen, die von der in der Filtergehäuseoberschale 3' befestigten Gewindebuchse 9 gebildet wird. Die Gewindebuchse 9 ist dabei in einem von der Filtergehäuseoberschale 3' vorstehenden Bereich angeordnet. Dieser Bereich steht soweit von der Innenoberfläche der Filtergehäuseoberschale 3' in der Weise vor, dass er im eingebauten Zustand gemäß Fig. 2 auf dem Bodenbereich der Ölwanne 1' aufsteht.

Zusammenfassend ergeben sich ergänzend zu den Vorteilen a) bis d) der ersten Ausführungsform für die Zweite Ausführungsform somit folgende Vorteile:
e) Einsparung einer Filterunterschale,
f) flacherer Aufbau ist möglich, und
g) Entfall jeglichen Luftspalts zwischen Filterunterseite und Ölwanneninnenseite.

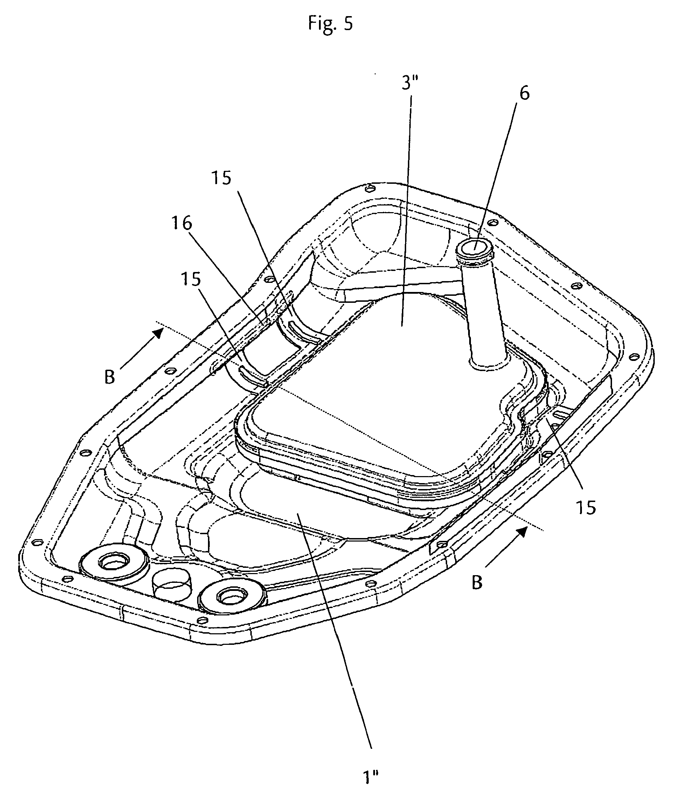

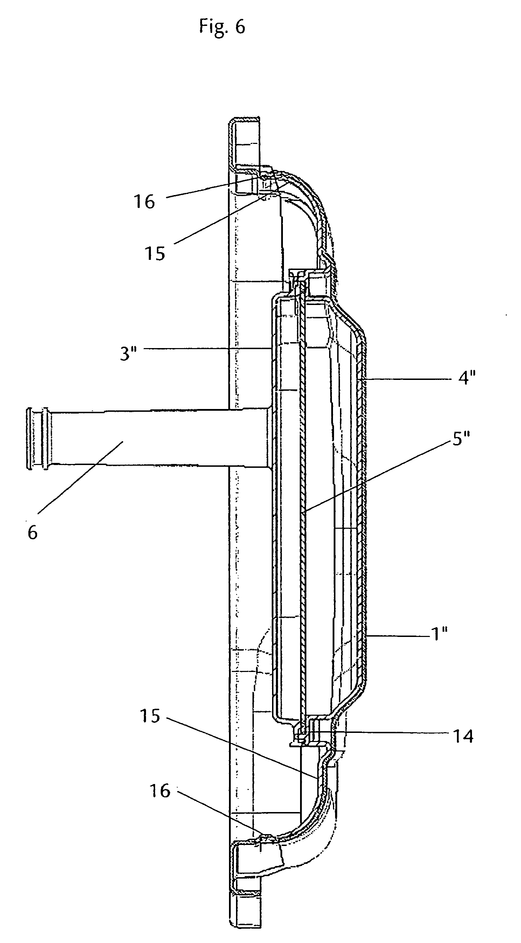

Die Vorteile der Erfindung ergeben sich aus dem dritten Ausführungsbeispiel gemäß Figuren 5 und 6. Gemäß dieser Variante erfolgt die Positionierung und Befestigung des Ölfilters 2 an der Ölwanne 1 nicht über die Ölablassschraube 7, sondern über Klemmmittel 15, die am Filtergehäuse 20 angeordnet sind und in Rastmittel 16, beispielsweise Raststege, die ölwannenseitig angeordnet sind, eingreifen. Diese Befestigungsmittel (Klemmmittel 15 und Rastmittel 16) sind vorzugsweise an zwei sich gegenüberliegenden Seiten vorhanden und ermöglichen somit eine Befestigung des Ölfilters 2 innerhalb der Ölwanne 1" unabhängig von der Lage der Ölablasschraube 7 (nicht dargestellt). Für die Befestigung des Ölfilters 2 kommt es somit auf die tatsächliche Position der Ölablassöffnung bzw. der Ölablassschraube nicht an.

Für das dritte Ausführungsbeispiel gemäß Fig.3 ergibt sich somit ergänzend zu den Vorteilen a), b) und d) bis g) der vorhergehenden Ausführungsbeispiele der Vorteil, dass bzgl. der Aufnahmebefestigung die Position der Ölablaßschraube frei wählbar ist. Zur Verstärkung der Befestigung des Ölfilters 2 in der Ölwanne 1 ist es optional möglich, zusätzlich zu den Klemmmittel 15 die Ölab!assschraube-7 (nicht dargestellt) zur Positionierung und Fixierung des Ölfilters 2 zu verwenden.

Der integrierte Ölfilter 2 ist vorzugsweise ein als Saugölfilter eingesetzter Hauptstromölfilter. Es ist auch denkbar, den Ölfilter 2 mit zusätzlichen Anschlüssen als eine Kombination aus Saug- und Druckölfilter auszubilden. Ebenso ist es bei Bedarf vorteilhaft, im gemeinsamen Filtergehäuse 20 sowohl Haupt- als auch Nebenstromölfilter anzuordnen.

## Patentansprüche

1. Ölwanne (1"-Fig.5,6), vorzugsweise aus Kunststoff oder Metall, für Motoren oder Getriebe, mit einem Filtergehäuse umfassend eine Filtergehäuseoberschale (3"), eine Filtergehäuseunterschale , ein Filtermedium (5"), einen Filtereinlass und einen Filterauslass (6), und mit eine Ölablassöffnung im Bodenbereich der Ölwanne (1"), die in der Weise ausgebildet ist, dass sie mittels einer von der Ölwannenunterseite kommenden Ölablassschraube mit Außengewinde verschließbar ist, wobei die Filtergehäuseunterschale von einem Bodenbereich der Ölwanne (1") gebildet wird, **dadurch gekennzeichnet, dass** das Filtergehäuse ein Klemmmittel (15) aufweist, mit welchem das Filtergehäuse in der Ölwanne (1") positioniert und befestigt wird, in der Weise, dass das Klemmmittel (15) in ein ölwannenseitig angeordnetes Rastmittel (16) eingreift.

2. Ölwanne (1) nach Anspruch 1, **dadurch gekennzeichnet, dass** an der Filtergehäuseoberschale (3") eine Aufnahme (14), insbesondere ein Aufnahmerahmen, vorhanden ist, der zur Aufnahme des Filtermediums (5") ausgebildet ist.

## Claims

1. Oil sump (1" - Figs. 5, 6), preferably made of plastic or metal, for engines or gearboxes, with a filter housing comprising an upper filter-housing shell (3"), a lower filter-housing shell, a filter medium (5"), a filter inlet and a filter outlet (6), and with an oil discharge aperture in the bottom region of the oil sump (1"), which aperture is constructed in such a way that it can be closed by means of an oil discharge screw emanating from the underside of the oil sump and having an external thread, wherein the lower filter-housing shell is formed by a bottom region of the oil sump (1"), **characterised in that** the filter housing has a clamping means (15), with the aid of which said filter housing is positioned and fastened within the oil sump (1") in such a way that the clamping means (15) engages in a latching means (16) arranged on the oil sump.

2. Oil sump (1) according to claim 1, **characterised in that** there is, on the upper filter-housing shell (3"), a receptacle (14), in particular a receiving frame, which is constructed for receiving the filter medium (5") .

## Revendications

1. Carter d'huile (1" - Fig. 5, 6), de préférence en un plastique ou un métal, pour moteurs ou engrenages, comportant un boîtier de filtre, comprenant une partie supérieure (3") de boîtier de filtre, une partie inférieure de boîtier de filtre, un milieu filtrant (5"), un orifice d'entrée de filtre et un orifice de sortie de filtre (6), et comportant un orifice de vidange d'huile dans la zone de fond du carter d'huile (1"), qui est configuré de façon à pouvoir être obturé à l'aide d'une vis de vidange d'huile à filetage extérieur, venant de la face inférieure du carter d'huile, la partie inférieure du boîtier de filtre étant formée d'une zone de fond du carter d'huile (1"), **caractérisé en ce que** le boîtier de filtre comprend un moyen de serrage (15), à l'aide duquel le boîtier de filtre est positionné et fixé dans le carter d'huile (1"), de telle sorte que le moyen de serrage (15) entre en prise avec un moyen d'encliquetage (16) disposé côté carter d'huile.

2. Carter d'huile (1) selon la revendication 1, **caractérisé en ce qu'**un logement (14), en particulier un cadre de montage configuré pour loger le milieu filtrant (5"), est présent contre la partie supérieure (3") du boîtier de filtre.
